(19) Europäisches Patentamt

European Patent Office

Office européen des brevets

(11) **EP 1 371 942 A1**

(12) **EUROPEAN PATENT APPLICATION**
published in accordance with Art. 158(3) EPC

(43) Date of publication:
**17.12.2003 Bulletin 2003/51**

(51) Int Cl.⁷: **G01B 11/24**

(21) Application number: **02708861.6**

(22) Date of filing: **21.02.2002**

(86) International application number:
**PCT/RU02/00060**

(87) International publication number:
**WO 02/066925 (29.08.2002 Gazette 2002/35)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.02.2001 RU 2001104813**

(71) Applicant: **A4 Vision S.A.**
**Geneva, 1207 (CH)**

(72) Inventors:
• **KLIMOV, Andrei Vladimirovich**
**Moscow, 115407 (RU)**
• **SUKHOVEI, Sergei Vladimirovich**
**Moscow, 115580 (RU)**
• **JUKHIN, Artem Leonidovich**
**Moscow, 109004 (RU)**

(54) **DEVICE FOR CONTACTLESS INSPECTION OF LINEAR DIMENSIONS OF THREE-DIMENSIONAL OBJECTS**

(57)    The invention relates to measurement technique and can be used for visualising profiles of three-dimensional objects. The inventive device performs a structured lighting method and comprises a light emission source, a transparency embodied in the form of a spatial light modulator, an objective lens projecting the image of line structure appearing on the surface of the controlled object and distorted by the surface relief of the controlled object, an additional objective lens projecting the transparency image on a controlled surface, a photorecorder transforming the image projected by the objective lens into a digital image, a digital electronic unit translating the digital images recorded by photorecorder into values of co-ordinates of the controlled surface according to a predefined formula. Since the structured lighting is embodied in the form of aperiodical band system, each band distorted by the surface relief of the controlled object is unambiguously identified making it possible to unambiguously calculate the relief height and the corresponding pair of co-ordinates.

## Description

## Technical Field

The invention relates to measuring engineering and can be used for visualization of profiles of three-dimensional objects.

## Background Art

The methods and the devices realizing a principle of "the structured illuminating" used in three-dimensional computer animation and some other applications for registration of a surface shape are known.

It is known the method and device realizing a principle it for contactless control of the linear sizes of three-dimensional objects. The method consists in that separate contours of a surface are consistently scanned using a luminous strip and the controllable sizes are judged by a degree of distortion of a strip image and a strip position in the Cartesian system of coordinates. The device, realizing method, contains the laser, the scanner, an objective, the photoregistrar, and the unit of processing of the information (see, for example, WO 98/27514).

Disadvantages of known device are low accuracy and prolonged time of the control, associated with the availability of operation and the unit of scanning.

The method and device realizing it to control the linear sizes of three-dimensional objects on three Cartesian coordinates are known. The method consists in that the system of multi-colored periodic strips is projected on an object. As a consequence all part of a controllable object surface getting in sight by photo-collecting device is registered in one frame completely, and the controllable sizes are judged by degree of image distortions of strips set and strips position in the Cartesian system of coordinates. The device realizing the method of the contactless control of the linear sizes of three-dimensional objects using a method of structured illuminating, containing a source of optical radiation and installed in series on a course of radiation: a transparent made as a slide of iridescent strips image; the objective projecting an image of iridescent strips picture arising on a surface of the controllable object, distorted by a surface relief; the photoregistrar transforming the image projected by an objective in digital and the digital electronic unit, which input is connected to an output of the photoregistrar, carrying out conversion of digital images registered by the photoregistrar in quantities of heights of relief. (See, for example, WO 00/70303).

Disadvantage of known device is the low accuracy caused by ambiguous reflection of a highlighting beam from a surface of color object and absence of the information on through apertures in a reflected picture.

It is known the method and device realizing it to control of the linear sizes of three-dimensional objects on three Cartesian coordinates. The method consists in that the system of concentric strips being produced by illuminating of coherent radiation, containing speckle-structure either as a system of concentric strips, or as chaotically located zones which form is monotonous, is projected on an object. The structured illuminating, distorted by a relief of a surface, is registered at variation of a wavelength of radiation at least two times. The pseudo-hologram, obtained by this method, contains system of interference strips, the distance between which in different points conforms to height of a relief. A data set about sizes of the above-stated distances, appropriately processed on the COMPUTER, allows to judge a relief of a controllable object surface. (See, for example, M.Franson. Optics of speckles. - M. Mir, 1980, p.141-143.).

Disadvantage of known method and devices realizing it is low certainty of the received data on a controllable surface on parts of a surface which reflection sharply differs from diffuse. Besides it is failed to identify through apertures, as zones of the structured illuminating are characterized by a high degree of similarity.

The chosen as the prototype, device realizing known method for contactless control of the linear sizes of three-dimensional objects by structured illuminating method is the most related of known in technical essence and achievable result. This device contains a source of optical radiation and installed in series on a course of radiation: a transparent made as a slide of a periodic line structure image, the objective projecting an image of a distorted by a surface relief picture of a periodic line structure, arising on a surface of the controllable object, the photoregistrar, transforming the image, projected by an objective, in digital and the digital electronic unit, which input is connected to an output of the photoregistrar, carrying out conversion of digital images registered by the photoregistrar in quantities:

$$Z = \frac{\Delta Y}{tg\alpha};$$

where: Z - the value of height of a surface profile in a point with coordinates X, Y, intersected by any strip of a line structure, $\Delta Y$ - the value of a curvature of a strip in this point, $\alpha$ - the angle between the direction of radiation from a source of an optical image and the objective optical axis. (See, for example, WO 99/58930). Disadvantages of known method are the high error of the control and the limited functionalities. The high error of measurement is caused by the fact, that at a directing of an optical radiation modulated along one coordinate by a transparent on a controllable object surface, an image with line structure arises and the distortions of picture caused by deep hollows, high curvatures and, especially, by through apertures can not be identified because of breaks in image of lines. The absence of strictly lines in an image does not allow to identify apertures on a controllable surface because the height of a relief is determined by value of lines distortions. Besides, at certain values of hollows and curvatures, it is impossible to identify a relief height and two other coordinates from strips distortions which values exceed the distance between strips. The limited functionalities are caused by a necessity to focus a controllable object on the certain distance from a source of radiation.

**Disclosure of Invention**

The essence of the claimed invention is expressed in a set of essential attributes sufficient for the prospective invention to achieve the technical result, which is expressed in the increasing accuracy of the linear sizes control of three-dimensional objects and widening possibilities at monitoring procedure because controllable object can be located without rigid positioning due to supplying a device with an additional objective and realizing a transparent as the spatial modulator of optical radiation intensity, and the electronic digital unit is made with an additional output for control of spatial modulators of optical radiation intensity.

The claimed set of essential attributes is in a direct relationship of cause and effect with the achievable result.

The claimed device contains a source of optical radiation and installed in series on a course of radiation: a transparent made as a slide of a periodic line structure image, the objective projecting an image of a distorted by a surface relief picture of a periodic line structure, arising on a surface of the controllable object, the photoregistrar, transforming the image, projected by an objective, in digital and the digital electronic unit, which input is connected to an output of the photoregistrar, carrying out conversion of digital images registered by the photoregistrar in quantities:

$$Z = \frac{\Delta Y}{tg\alpha};$$

where: Z - the value of height of a surface profile in a point with coordinates X, Y, intersected by any strip of a line structure, $\Delta Y$ - the value of a curvature of a strip in this point, $\alpha$ - the angle between the direction of radiation from a source of an optical image and the objective optical axis (attributes of the prototype).

Novelty of proposed device is seen that it is supplied in addition with the second objective for projecting a transparent image on a controllable surface, installed behind a transparent on the distance equal projective, made as afocal optical system, the second electronic unit for the digital images composition, which input is connected with an output of the photoregistrar, and an output with an input of the first electronic digital unit, the transparent is made as the controlled spatial modulator of intensity of optical radiation with a possibility to produce the structured illuminating as aperiodic system of strips, the first electronic digital unit is supplied with the additional output connected to a control input of the modulator of optical radiation intensity and made with a possibility to operate the spatial modulation of optical radiation intensity.

Comparison of the claimed technical decision with the prototype has enabled to establish its consistency to criterion "novelty" as it is not known from an engineering level.

The proposed device is industrially applicable by current means as its realization does not require producing new elements, materials and technologies, because spatial modulators of optical radiation intensity are realized with the liquid crystals, conforms to criterion "the invention level", as it does not obviously follow from an engineering level, thus from the last one it is not revealed any elements and connection between the elements, characterized by distinctive essential attributes from the prototype, directed on achievement of the specified technical result.

Thus, the proposed technical decision conforms to established conditions of patentability of the invention.

**Brief Description of Drawings**

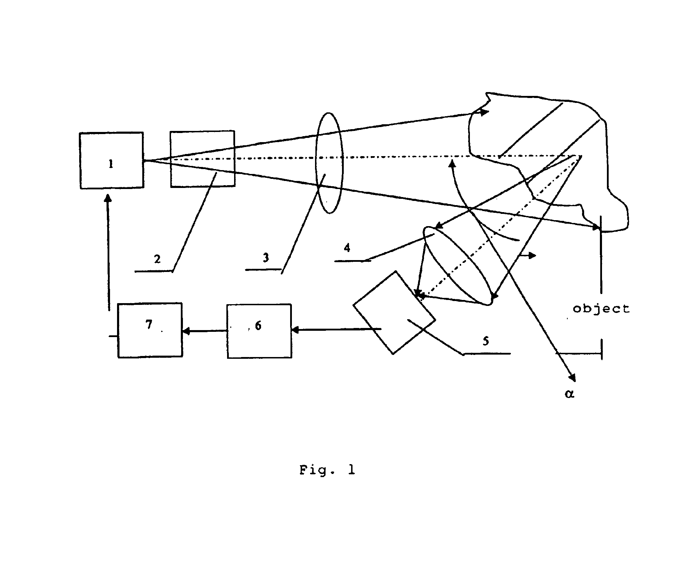

The diagram of the proposed device is shown on Fig.1. The device contains the source 1 of radiation, transparent 2, the additional objective 3, installed behind the transparent 2 at the distance equal projective, the objective 4, the photoregistrar 5, installed in the plane of an image of the objective 4, the additional electronic unit 6, which input is connected to an output of the photoregistrar 5, the digital electronic unit 7, which input is connected to an output of the additional electronic unit 6, and an output - with control input of the transparent made as the spatial modulator of optical radiation intensity.

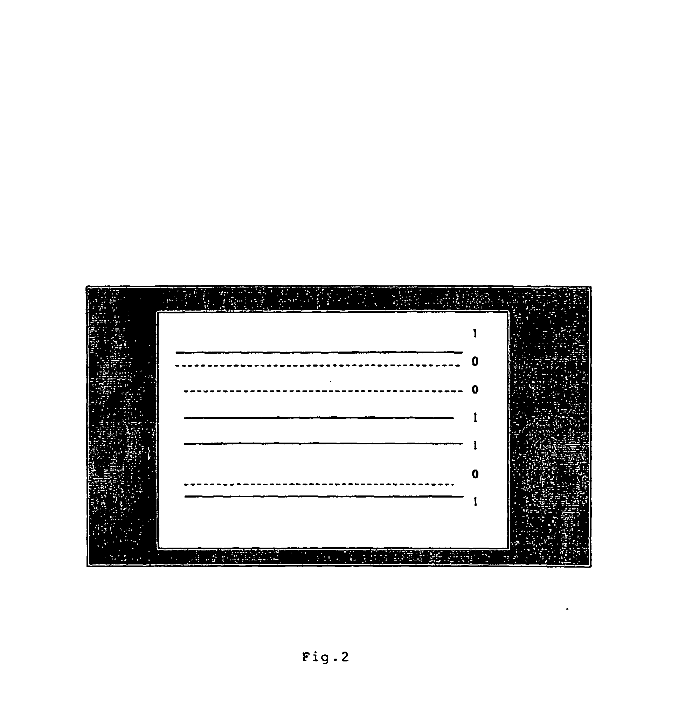

The first realization of the transmission function of the transparent 2 is shown on Fig.2.

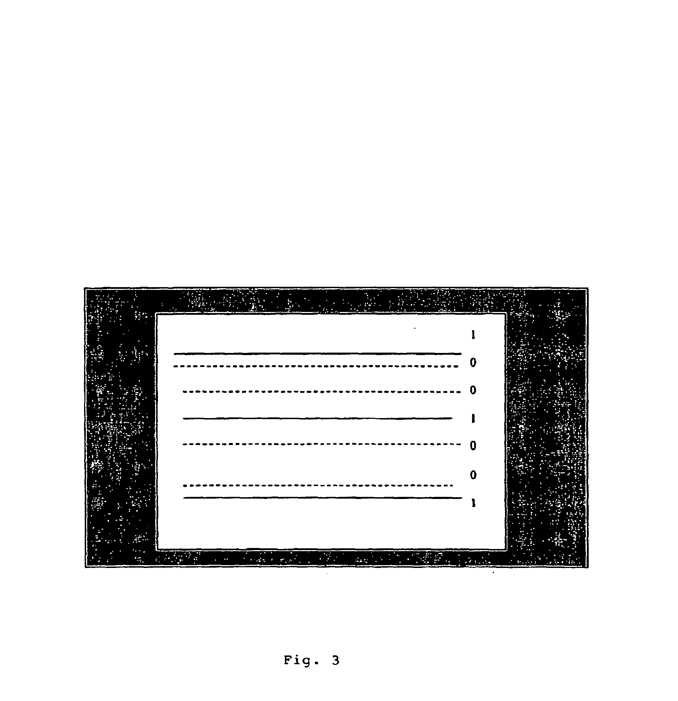

The second realization of the transmission function of the transparent 2 is shown on Fig.3. Continuous lines on Fig.2 and Fig.3 are coded by "one", dotted ones conform to absence of a strip in actual transparent and are coded by "zero". Both realizations of a digital image of a line structure and an appropriate to them code as a sequence of "zero" and "one" are stored in the memory of the digital unit 6.

The Fig.4 shows the digital (binary) image of a line structure arising on a surface of the controllable object at its distortions by a surface relief under illuminating of line structure, shown on Fig.2.

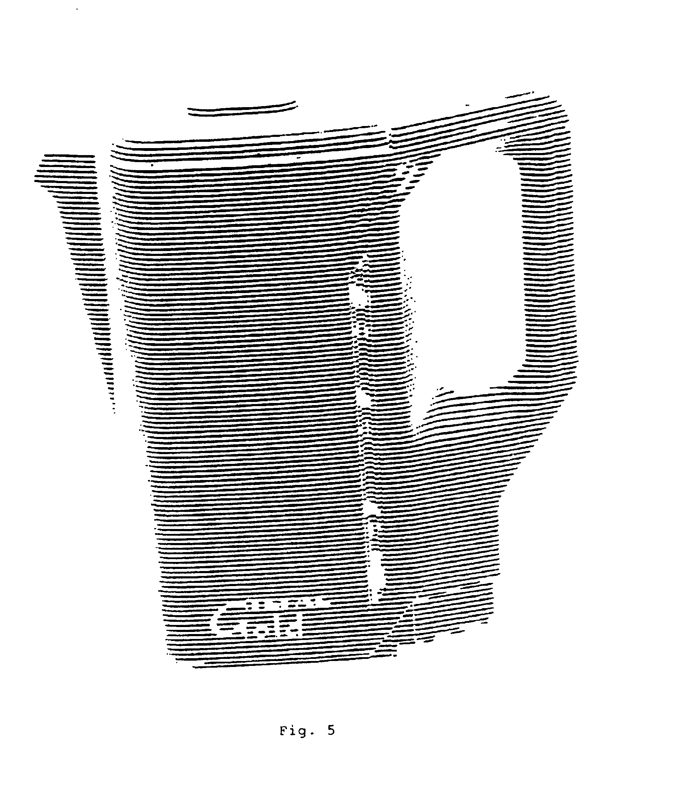

The Fig.5 shows the digital (binary) image of the line structure, arising after summation of two above-mentioned images in the additional electronic unit 6.

**Best Mode for Carrying Out the Invention**

The invention is shown on the drawings. The device contains the source 1 of radiation, transparent 2, the additional objective 3, installed behind the transparent 2 at the distance equal projective, the objective 4, the photoregistrar 5, installed in the plane of an image of the objective 4, the additional electronic unit 6, which input is connected to an output of the photoregistrar 5, the digital electronic unit 7, which input is connected to an output of the additional electronic unit 6, and an output - with control input of the transparent made as the spatial modulator of optical radiation intensity.

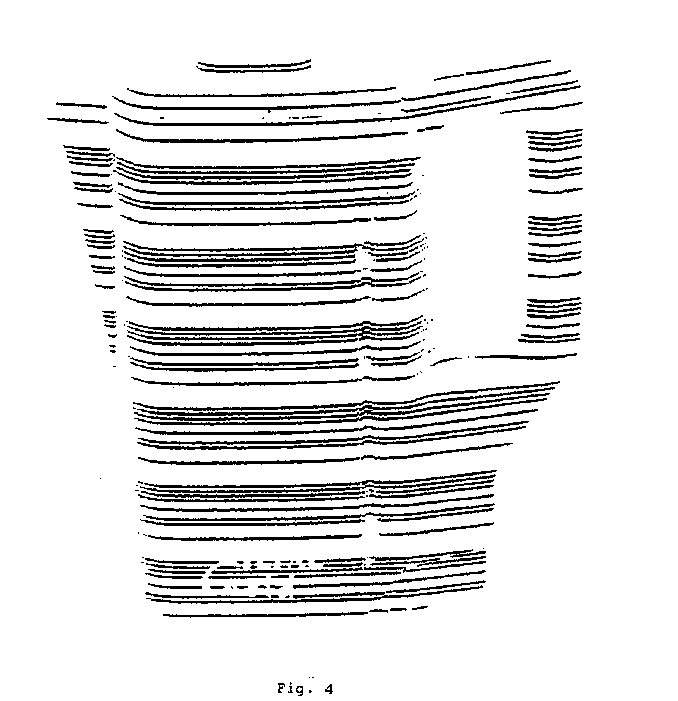

The device works as follows. The image of a controlled transparent 2 with the help of an additional objective 3 is projected on a surface of controllable object, which relief unequivocally distorts an image of the transparent 2. The objective 4 projects arising on a surface picture of the structured illuminating distorted by a relief of the controllable object surface on a sensitive platform of the photoregistrar 5. The additional electronic unit 6 carries out summation of the digital image incoming from an output of the photoregistrar 5 with contents of its memory (originally, set of "zero" is stored in memory). Simultaneously, the sequence of "ones" and "zeros", coding the sequence of lines in the structured illuminating generated by the first realization of transmission function of the transparent 2 ("1" - the line is present, "0" - the line is not present). The above-listed sequence repeats second time, but in this case modulator 2 forms the structured illuminating appropriate to the second realization of the transmission function of the transparent 2 (Fig. 3) on a signal from an output of the first digital electronic unit 7. The total picture of the line structure arising on a surface of the controllable object, distorted by a surface relief of the controllable object is formed in memory of the additional electronic unit 6 (see Fig.4). Simultaneously, the code obtained by summation of code sequences conforming to codes of the first and second realizations of transmission function of the transparent 2 is formed in memory of the additional electronic unit 6. Thus the code "11" conforms to the sum of two "ones" (i.e. images of two lines), and the sum of images of a line and a blank - codes "10", or "01". Thus each line (strip) in a digital (binary) total image of the line structure, arising after summation of two above-mentioned images in the additional electronic unit 6, is coded by a number as a binary code. The number of recurrences of the above-described cycle is determined depending on the image sizes of registered object and practically is limited to nothing.

Because distances between the strips forming structural illuminating do not repeat in the registered picture, At image processing in the digital electronic unit, each strip distorted by a surface relief of a controllable object, is identified unequivocally on the code (number), that, in turn, makes possible to calculate unequivocally the height of a relief and appropriate pair of coordinates. As a consequence accuracy and certainty of the control increase.

**Industrial Applicability**

This invention can be used successfully in technological forming processes of complex-shaped objects (vanes of turbines and the like). In addition, it can be used in various applications of computer three-dimensional diagrams.

LITERATURE.

M.Franson. Optics of speckles. - M.:Mir, 1980, p.141-143. Technical vision of robots.- by ed. A.Pew.; trans. from eng.-M.:Mashinostroenie, 1987. p.56-57

**Claims**

1. The device for the contactless control of the line sizes of three-dimensional objects using a method of structured illuminating, containing a source (1) of optical radiation and installed in series on a course of radiation: a transparent (2), an objective (4) projecting an image of a line structure picture arising on a surface of the controllable object, distorted by a surface relief of the controllable object, the photoregistrar (5), transforming the image projected by an objective in digital, the digital electronic unit (7) converting digital images registered by the photoregistrar (5) in quantities of coordinates of a controllable surface by the formula:

$$Z= \frac{\Delta Y}{tg\alpha};$$

where: Z - the value of height of a surface profile in a point with coordinates X, Y, intersected by any strip of a line structure, $\Delta Y$ - the value of a curvature of a strip in this point, $\alpha$ - the angle between the direction of radiation of a source (1) of an optical image and the objective (4) optical axis,
DISTINGUISHED subject matters, that it is supplied with the second objective (3) for projecting a transparent image on a controllable surface installed behind a transparent on the distance equal projective, made as afocal optical system, the second electronic unit (6) for the digital images composition, which input is connected with an output of the photoregistrar, and an output with an input of the first electronic digital unit (7), the transparent (2) is made as the controlled spatial modulator of intensity of optical radiation with a possibility to produce the structured illuminating as aperiodic systems of strips, the first electronic digital unit (7) is supplied with the additional output connected to a controlling input of the modulator of optical radiation intensity and made with a possibility to operate the spatial modulation of optical radiation intensity.

Fig. 1

Fig.2

Fig. 3

Fig. 4

Fig. 5

# EP 1 371 942 A1

<table>
<tr><td colspan="2"><strong>INTERNATIONAL SEARCH REPORT</strong></td><td>International application No.<br>PCT/RU 02/00060</td></tr>
</table>

| A. CLASSIFICATION OF SUBJECT MATTER |
| --- |
| G01B 11/24 |
| According to International Patent Classification (IPC) or to both national classification and IPC |

| B. FIELDS SEARCHED |
| --- |
| Minimum documentation searched (classification system followed by classification symbols) |
| G01B 11/00-11/30, 21/00-21/30, 9/00, 15/00-15/08 |
| Documentation searched other than minimum documentation to the extent that such documents are included in the fields searched |
| Electronic data base consulted during the international search (name of data base and, where practicable, search terms used) |

## C. DOCUMENTS CONSIDERED TO BE RELEVANT

| Category* | Citation of document, with indication, where appropriate, of the relevant passages | Relevant to claim No. |
| --- | --- | --- |
| A | WO 99/58930 A1 (METACREATIONS CORPORATION) 18 November 1999 (18.11.1999) | 1 |
| A | WO 00/70303 A1 (3DMETRICS, INCORPORATED) 23 November 2000 (23.11.2000) | 1 |
| A | RU 2105265 C1 (ZAKRYTOE AKTSIONERNOE OBSCHESTVO "AEROKON") 20.02.1998 | 1 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 June 2002 (03.06.02)** | **20 June 2002 (20.06.02)** |

| Name and mailing address of the ISA/ | Authorized officer |
| --- | --- |
| **RU** | |
| Facsimile No. | Telephone No. |

Form PCT/ISA/210 (second sheet) (July 1992)